# EUROPÄISCHE PATENTSCHRIFT

(11) **EP 2 868 586 B1**
(45) Veröffentlichungstag und Bekanntmachung des Hinweises auf die Patenterteilung: **30.11.2016**
(21) Anmeldenummer: 14187330.7
(22) Anmeldetag: 01.10.2014
(51) Int. Cl.: B65B 25/06, B65B 61/28, B65B 51/14, B65B 11/50, B29C 65/20, B29C 65/78, B29C 65/00

(54) **Folienschweissgerät mit einer Entladevorrichtung für eine Aufschnittpackung**
Film welding device with a discharging device for a package of cold cuts
Appareil de soudage de feuilles avec un dispositif de décharge pour un emballage d'assortiment de charcuterie

(30) Priorität: 10.10.2013 AT 506522013
(43) Veröffentlichungstag der Anmeldung: 06.05.2015
(73) Patentinhaber: Kuchler, Fritz, 9020 Klagenfurt (AT)
(72) Erfinder: Kuchler, Fritz, 9020 Klagenfurt (AT)
(74) Vertreter: Müllner, Martin

(56) Entgegenhaltungen:
- EP-A2- 2 428 454
- US-A- 3 002 326

## Beschreibung

Die Erfindung betrifft ein Folienschweißgerät mit einer Ablagefläche, einer Entladevorrichtung und insbesondere mit randseitig umklappbaren Heizleisten, wobei die Entladevorrichtung einen Auswerfer für einen Aufschnitt von Wurst, Käse oder dgl. auf einer Trägerfolie und einer mit der Trägerfolie verschweißten, den Aufschnitt einschließenden Deckelfolie aufweißt.

Schnittfähige Lebensmittel, wie z.B. Wurst oder Käse werden auf der Theke unmittelbar vor den Kunden entsprechend der Bestellung frisch aufgeschnitten, verpackt, gewogen und überreicht. Wenn eine einfache Schneidemaschine zur Verfügung steht, dann entnimmt der Verkäufer oder die Verkäuferin die Scheiben einzeln und legt sie auf eine Folie. Automatische Schneidemaschinen für den Einsatz auf der Theke, also vor den Kunden, verfügen über ein Ablegesystem. Es wird ein Aufschnitt selbsttätig nach den Wünschen des Kunden gefächert und flächendeckend auf einer Unterlags- oder Trägerfolie abgelegt. In beiden Fällen können Folienschweißgeräte zum Einsatz kommen, die als Ablegetablett fungieren und entweder von Hand oder vollautomatisch mit einer Trägerfolie, dem Aufschnitt und einer Deckfolie beladen werden. Entweder werden die Folien sodann mittels eines Stempels oder mit Hilfe von Heizleisten randseitig verschweißt. Der fertig verpackte Aufschnitt liegt also zur Entnahme auf der Ablegefläche des Folienschweißgerätes.

Aus der EP 1260327 B ist ein Folienschweißgerät im Zuge einer Aufschnittschneidemaschine mit Fördervorrichtung bekannt, das über Förderbänder verfügt, die den fertig verpackten Aufschnitt aus dem Folienschweißgerät abtransportiert. Diese Ausführungsform arbeitet zwar einwandfrei, erfordert jedoch einen größeren technischen Aufwand.

Folienschweißgeräte gemäß der AT 500725 B können von oben beladen werden und eignen sich daher zur Positionierung direkt im Ablegebereich einer Aufschnittschneidemaschine wie auch neben einer solchen, wenn kein Ablegesystem vorhanden ist. Da der Raum oberhalb des Folienschweißgerätes zum Zuführen der Trägerfolie, des Aufschnitts und der Deckfolie freigehalten ist, kann dieser Raum auch für das Entladen genützt werden.

Die EP 2 428 454 A2 betrifft eine Anordnung eines Folienspenders, eines Folienschweißgerätes und einer Übergabevorrichtung. Das Folienschweißgerät kann unmittelbar im Ablegebereich einer Aufschnittschneidemaschine angeordnet sein. Die Übergabevorrichtung verfügt über einen Greifarm mit Saugnäpfen, der die Folien aus dem Folienspender entnimmt und auf die Ablagefläche der Folienschweißeinrichtung bzw. den Aufschnitt legt. Dieser Greifarm kann auch einen fertig verpackten und verschweißten Aufschnitt von oben erfassen und aus dem Folienschweißgerät herausheben. Somit hat der Greifarm auch eine Entladefunktion.

Ziel der Erfindung ist ein Folienschweißgerät mit einer Entladevorrichtung, die ohne großen
technischen Aufwand allenfalls auch nachträglich zu einem Folienschweißgerät ergänzt werden kann, die aber auch bei vollautomatischen Aufschnittschneidemaschinen zur Ansteuerung durch eine zentrale Maschinensteuerung geeignet ist.

Dies wird dadurch erreicht, dass der Auswerfer, beispielsweise ein Rechen, Stabrost oder Gitterrahmen, Teil des Folienschweißgerätes ist, in oder über der Ablagefläche liegt und aus dem Folienschweißgerät heraus, den verpackten Aufschnitt untergreifend, in eine Schrägstellung um eine außerhalb der Ablagefläche auf dem Folienschweißgerät vorgesehene Achse durch einen Hebel oder mittels eines Antriebs zum Auswerfen hochklappbar ist. Es ist nicht erforderlich - wenngleich möglich - die Ablagefläche im Folienschweißgerät hochklappbar auszuführen. Es genügt, einen Rechen oder Gitterrost auszubilden, auf den die Trägerfolie, dann der Aufschnitt und schließlich die Deckfolie zu liegen kommen. Die Eigenstabilität des so verpackten Aufschnitts ist ausreichend, dass dieser schon bei einer mehrfachen Punkt- oder Linienberührung einer Bewegung des Auswerfers folgt. Im einfachsten Fall wird der Auswerfer mit einem Handhebel gegen Federkraft aus der Beladestellung in die Abwurfstellung hochgeschwenkt. Natürlich ist auch der Einbau eines Bowdenzuges mit Fußtaste (Fußpedal) für das Schwenken des Auswurfes möglich. Ein Motor oder Hubmagnet zum Antrieb der Achse ist dann sinnvoll, wenn das Folienschweißgerät zusammen mit einer Aufschnittschneidemaschine mit Ablegeeinrichtung betrieben wird. Die Steuerbefehle für das Auswerfen kommen in diesem Fall von der Steuerung der Aufschnittschneidemaschine.

Je nach der Gestaltung des Auswerfers als Rechen, Gitterrost oder dergleichen ergibt sich ein zumeist geringer Reibungskoeffizient zwischen der fertigen Verpackung und den Berührungspunkten, Linien oder Flächen des Auswerfers. Es wird somit bereits ein kleiner Schwenkwinkel genügen (z.B. 40°) um die Aufschnittpackung in einen Sammelkorb abgleiten zu lassen. Alternativ ist auch eine ruckartige Schlägerbewegung möglich, die zu einem Abwerfen führt. Eine besondere Schwenkcharakteristik für den Schläger (variables Drehmoment über der Zeitachse) kann durch entsprechend gesteuerte Anspeisung des elektrischen Antriebs erreicht werden. Auch eine mechanische Dämpfung ist möglich.

Bei einem Folienschweißgerät mit randseitig umklappbaren Heizleisten, die die Folien randseitig einklemmen und thermisch verschweißen, ergibt sich bei offenen Heizleisten an den Ecken ein freier Durchgang, der für das Gestänge des Auswerfers, insbesondere für die Verbindung des Rechens, Stabrostes oder Gitterrahmens zur Achse genutzt werden kann.

Es ist zweckmäßig, wenn der Auswerfer aus einem Gitterwerk aus Stäben als Rechen, Stabrost oder Gitterrahmen aufgebaut ist, wobei die Stäbe in kongruenten Ausnehmungen liegen und aus den Ausnehmungen unter Mitnahme der verpackten Aufschnitte heraus- bzw. hochschwenkbar sind und vorzugsweise wenn die Ablagefläche als Wiegefläche ausgebildet ist. Das Auflegen der Trägerfolie erfolgt bei entsprechender Tiefe der Ausnehmungen, in welchen die Stäbe des Auslegers zur Gänze eintauchen, auf einer planen Ebene, die sogar als Wiegeteller ausgebildet sein kann. Dies insbesondere dann, wenn die Eintauchtiefe in die Ausnehmungen um den Messweg von Wiegezellen größer ist, als die Höhe der Stäbe des Auswerfers. Eine Relativbewegung der Ablagefläche zu den versenkt und mit ausreichenden Freiraum liegenden Stäben des Auswerfers ist dann möglich, sodass die Wiegezellen zur Gewichtsermittlung (z.B. Zirkagewicht beim Aufschneiden) angesprochen werden können.

Wenn der Antrieb des Auswerfers mit einer Steuerung des Folienschweißgerätes in Verbindung steht und dem Antrieb ein Einschaltbefehl beim Öffnen der Heizleisten von der Steuerung allenfalls zeitverzögert zuführbar ist, dann kann das Folienschweißgerät in eine Aufschnittschneidemaschine integriert bzw. dieser so zugeordnet werden, dass fertige Verpackungen frisch geschnittener Scheiben direkt abgeworfen werden. Natürlich ist ein Vorbereiten von frisch verpacktem Aufschnitt für die Theke zur Entnahme durch die Kunden ebenso möglich.

Ein Ausführungsbeispiel zum Erfindungsgegenstand ist in den Zeichnungen schematisch dargestellt.
- Fig. 1 zeigt: eine Draufsicht auf ein Folienschweißgerät mit Entladevorrichtung und Sammelkorb und
- Fig. 2: eine Seitenansicht zu Fig. 1 (teilweise im Schnitt).

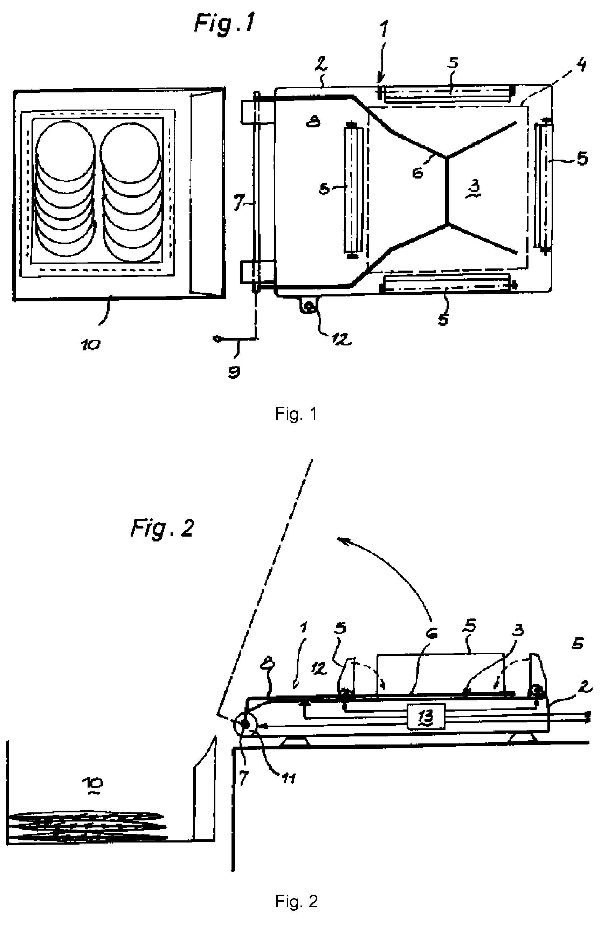

Ein Folienschweißgerät 1 besteht aus einem flachen Gehäuse 2 mit einer Ablagefläche 3 für das geschnittene Gut (z.B. Wurstscheiben), das von Hand auf eine zuvor eingelegte Trägerfolie aus Kunststoff abgelegt und sodann mit einer Deckfolie abgedeckt wird. Die beiden deckungsgleich liegenden Folien 4 sind in Fig. 1 strichliert angedeutet. Dieser Vorgang einschließlich des Aufschneidens kann auch vollautomatisch ausgeführt werden. Das Verschweißen der Randbereiche der beiden Folien 4 erfolgt mit Hilfe von vier randseitigen Heizleisten 5, die beim Einlegen der Folien 4 einschließlich des Aufschnitts hochgeklappt sind und einen freien Zugang zur Ablegefläche 3 ermöglichen. Diese Heizleisten 5 können in die in Fig. 2 strichliert eingezeichnete Position abgeklappt werden. Sie drücken die Folien 4 randseitig gegen eine Umrandung der Ablagefläche 3, in welcher Heizdrähte eingelegt sind. Beim Schließen der Heizleisten 5 erfolgt das Aufheizen der Heizdrähte in den Heizleisten 5 und in der Umrandung der Ablagefläche 3. Eine Verpackung wird auf diese Weise gebildet und kann entnommen bzw. gemäß der Erfindung ausgeworfen werden.

Als Entladevorrichtung ist unmittelbar über der Ablagefläche 3 ein Auswerfer 6 vorgesehen, der um eine Achse 7 hochschwenkbar gelagert ist. Dieser Auswerfer 6 ist im Ausführungsbeispiel als etwa H-förmiger Stabrost ausgebildet, dessen Schenkel 8 beiderseits einen Zwischenraum zwischen den hochgeklappten Heizleisten 5 durchsetzen und zu der außerhalb des Gehäuses 2 angeordneten Achse 7 führen. Die Stäbe des Stabrostes können auch in Ausnehmungen in der Ablagefläche 3 versenkt liegen, sodass die Trägerfolie plan auf der Ablagefläche 3 zu liegen kommt. In der Praxis hat es sich gezeigt, dass ein Auswerfer 6, der unmittelbar auf der Ablagefläche 3 liegt, durchaus seine Funktion erfüllt. Vor allem kann ein solcher Auswerfer 6 auch nachgerüstet werden.

Im einfachsten Fall erfolgt die Betätigung des Auswerfers 6 durch einen Hebel 9, der an der Achse 7 ansetzt (strichliert in Fig. 1 eingezeichnet). Dieser Hebel 9 kragt beispielsweise in einem Winkel von 60° zur Horizontalen nach oben und schwenkt bei Betätigung den Auswerfer 6 somit (gegen die Kraft einer Rückstellfeder) um 60° in Richtung auf einen Sammelkorb 10. Eine fertig verschweißte Verpackung wird dadurch von der Ablagefläche 3 abgehoben und gleitet in den Sammelkorb 10 respektive in eine Übernahmeposition. Wenn ein den Schwenkwinkel begrenzender Anschlag z.B. für den Hebel 9 vorgesehen ist, dann wird die verschweißte Verpackung am Ende der Schwenkbewegung abgeworfen.

Die Achse 7 kann gemäß Fig. 2 auch durch einen Elektromotor 11 (oder einen Hubmagneten) zur Ausführung der Schwenkbewegung des Auswerfers 6 angetrieben werden. Die Auslösung dieser elektromotorischen Schwenkbewegung erfolgt nach Einleiten der Verschweißung der Verpackung durch Druck auf eine Taste 12. Ausgehend von der Offenstellung der Heizleisten 5 wird die Ablagefläche 3 mit der Trägerfolie, dem Aufschnitt und der Deckfolie beladen, dann die Taste 12 für das Umklappen der Heizleisten 5 und für den Schweißvorgang betätigt, wobei nach Abschluss des Verschweißens, z.B. zeitverzögert, ein Signal an den Elektromotor 11 geht. Damit wird der Auswerfer 6 hochgeschwenkt und die fertige Verpackung dem Sammelkorb 10 zugeführt oder in die Übernahmeposition gebracht. In Fig. 2 ist eine Steuerung 13 eingezeichnet, die diesen Vorgang bewirkt. Diese Steuerung 13 kann an Stelle des Befehls über die Taste 12 von einer Aufschnittschneidemaschine mit Ablegeeinrichtung angesprochen werden. Sobald ein vorprogrammierter Aufschnitt auf einer automatisch zugeführten Trägerfolie abgelegt und mit Deckfolie abgedeckt ist, erfolgt der Startbefehl an das Folienschweißgerät. Die Heizleisten 5 klappen zu und öffnen nach dem Verschweißen, worauf der Motor 11 den Auswerfer 6 aktiviert. Die Entladevorrichtung ist somit für einzeln stehende Folienschweißgeräte bei Verpackungen beliebiger Art (z.B. Wurst, eventuell mit Gurkenscheiben oder dergleichen) als auch im vollautomatischen Betrieb nach Kundenwunsch bzw. auch im Serienbetrieb etwa in der Position des Ablegetabletts auf einer Aufschnittschneidemaschine mit Ablegeeinrichtung und Folienzuführung zweckmäßig.

## Patentansprüche

1. Folienschweißgerät (1) mit einer Ablagefläche (3), einer Entladevorrichtung und insbesondere mit randseitig umklappbaren Heizleisten, wobei die Entladevorrichtung einen Auswerfer (6) für einen Aufschnitt
von Wurst, Käse oder dergleichen auf einer Trägerfolie und einer mit der Trägerfolie verschweißten, den Aufschnitt einschließenden Deckelfolie aufweißt,
**dadurch gekennzeichnet, dass** der Auswerfer (6), beispielsweise ein Rechen, Stabrost oder Gitterrahmen, ist, in oder über der Ablagefläche (3) liegt und aus dem Folienschweißgerät (1) heraus, den verpackten Aufschnitt untergreifend, in eine Schrägstellung um eine außerhalb der Ablagefläche auf dem Folienschweißgerät vorgesehenen Achse (7) durch einen Hebel (9) oder mittels eines Antriebs zum Auswerfen hochklappbar ist.

2. Folienschweißgerät nach Anspruch 1, **dadurch gekennzeichnet, dass** der Auswerfer (6) aus einem Gitterwerk aus Stäben als Rechen, Stabrost oder Gitterrahmen aufgebaut ist, wobei die Stäbe in kongruenten Ausnehmungen liegen und aus den Ausnehmungen unter Mitnahme der verpackten Aufschnitte heraus- bzw. hochschwenkbar sind und vorzugsweise, dass die Ablagefläche (3) als Wiegefläche ausgebildet ist.

## Claims

1. A foil-welding device (1) having a support surface (3), a discharge device, and more particularly having, at the side, heating bars that fold down, the discharge device having an ejector (6) for a cold cut of meat, cheese or the like on a carrier foil and a covering foil that encloses the cold cut and is welded to the carrier foil, **characterized in that** the ejector (6), for example a rake, bar grating, or grid frame, lies in or over the support surface (3), and can be swung up, out of the foil-welding device (1), by a lever (9) or by means of a drive for the ejection, about a pivot member (7) that is provided on the foil-welding device outside the support surface, into an inclined position, engaging underneath the packaged cold cut.

2. A foil-welding device according to Claim 1, **characterized in that** the ejector (6) is formed from a lattice of bars as a rake, bar grating, or grid frame, the bars lying in corresponding recesses and it being possible for the bars to be swung out of and/or upwards from the recesses while bringing along the packed cold cuts, and preferably, that the support surface (3) is formed as a weighing surface.

## Revendications

1. Appareil de soudage de feuilles (1), comportant une surface de dépôt (3), un dispositif de déchargement et en particulier, sur ses bords, des lames chauffantes rabattables, ledit dispositif de déchargement comportant un éjecteur (6) destiné à des tranches de charcuterie, de fromage ou de produits apparentés, sur une feuille de support et une feuille de couverture qui est soudée à la feuille de support en enfermant lesdites tranches, **caractérisé en ce que** l'éjecteur (6), s'agissant par exemple d'un râteau, d'une grille de barreaux ou d'un cadre à grillage, est situé dans ou au-dessus de la surface de dépôt (3) et peut pivoter, au moyen d'un levier (9) ou d'un moteur visant à effectuer l'éjection, vers le haut autour d'un axe (7) dont l'appareil de soudage de feuilles est pourvu en-dehors de la surface de dépôt, pour ainsi sortir de l'appareil de soudage de feuilles (1), prendre les tranches emballées par le bas et adopter une position inclinée.

2. Appareil de soudage de feuilles selon la revendication 1, **caractérisé en ce que** l'éjecteur (6) est composé d'un treillage de barreaux formant un râteau, une grille de barreaux ou un cadre à grillage, lesdits barreaux reposant dans des évidements de forme complémentaire et pouvant pivoter, à partir desdits évidements, pour quitter ces derniers vers le haut en emportant les tranches emballées, la surface de dépôt (3) étant préférentiellement réalisée sous forme d'une surface de pesée.
